Europäisches Patentamt

(19) European Patent Office

Office européen des brevets

(11) Veröffentlichungsnummer: **0 154 244**

**B1**

(12) **EUROPÄISCHE PATENTSCHRIFT**

(45) Veröffentlichungstag der Patentschrift:
**29.03.89**

(21) Anmeldenummer: **85101795.4**

(22) Anmeldetag: **19.02.85**

(51) Int. Cl.⁴: **C 08 L 51/00, C 08 L 51/04**

(54) **Matte Formmassen.**

(30) Priorität: **27.02.84 DE 3407018**

(43) Veröffentlichungstag der Anmeldung:
**11.09.85 Patentblatt 85/37**

(45) Bekanntmachung des Hinweises auf die Patenterteilung:
**29.03.89 Patentblatt 89/13**

(84) Benannte Vertragsstaaten:
**BE DE FR GB IT NL**

(56) Entgegenhaltungen:
**FR-A-1 567 596**

(73) Patentinhaber: **BAYER AG, Konzernverwaltung RP
Patentabteilung, D-5090 Leverkusen 1 Bayerwerk
(DE)**

(72) Erfinder: **Eichenauer, Herbert, Dr., Goethestrasse
71, D-4047 Dormagen 1 (DE)**
Erfinder: **Döring, Joachim, Dr., Silesiusstrasse 78,
D-5000 Koeln 80 (DE)**
Erfinder: **Ott, Karl- Heinz, Dr., Paul- Klee- Strasse
54, D-5090 Leverkusen 1 (DE)**
Erfinder: **Bottenbruch, Ludwig, Dr.,
Woehlerstrasse 5, D-4150 Krefeld 1 (DE)**

**Beschreibung**

Die Erfindung betrifft Formmassen mit matter Oberfläche auf der Basis von neutralen und sauren Pfropfpolymerisaten.

Polymerlegierungen mit elastisch-thermoplastischen Eigenschaften und matter Oberfläche sind von wachsendem Interesse für Anwendungsbereiche, bei denen hohe Zähigkeit und gleichzeitig Blendfreiheit gefordert werden, so z. B. für Teile im Automobilinnenbereich oder für Geräteabdeckungen.

Bisher wurde versucht, solche Polymerlegierungen durch Einsatz großer Kautschukteilchen (vgl. z. B. US-PS-4 169 869) oder Verwendung unvernetzter oder nur schwach vernetzter Kautschuke (vgl. z. B. DE-OS-2 057 936) als Pfropfgrundlage der Pfropfpolymerisate herzustellen.

Bei allen diesen Versuchen wird aber die erwünschte Oberflächenbeschaffenheit mit dem Verlust an ebenfalls gewünschten Produktqualitäten wie z. B. Kerbschlagzähigkeit, Härte oder Verarbeitbarkeit erkauft.

Gegenstand der Erfindung sind matte Formmassen aus

A) 99,95 bis 0,05 Gew.-%, bevorzugt 70 bis 30 Gew.-%, eines Pfropfproduktes eines Gemisches aus 40 bis 100 Gew.-Teilen Styrol, α-Methylstyrol, p-Methylstyrol, Vinyltoluol, Methylmethacrylat oder Mischungen daraus und 60 bis 0 Gew.-Teilen Acrylnitril auf einen teilchenförmigen Kautschuk mit einem mittleren Teilchendurchmesser $(d_{50})$ von 0,05 bis 20,0 µm und einer Glastemperatur $\leqslant$ 10°C mit einem Gesamtkautschukgehalt von 5 bis 80 Gew.-% und

B) 0,05 bis 99,95 Gew. %, bevorzugt 30 bis 70 Gew.-% eines Pfropfproduktes eines Gemisches aus 40 bis 99,9 Gew.-Teilen Styrol, α-Methylstyrol, p-Methylstyrol, Vinyltoluol, Methylmethacrylat oder Mischungen daraus, 40 bis 0,1 Gew.-Teilen einer eine polymerisierbare Doppelbindung enthaltenden Mono- oder Disäure und 0 bis 49 Gew.-Teilen Acrylnitril auf einen teilchenförmigen Kautschuk mit einem mittleren Teilchendurchmesser $(d_{50})$ von 0,05 bis 20,0 µm und einer Glastemperatur $\leqslant$ 10°C mit einem Gesamtkautschukgehalt von 5 bis 80 Gew.-%.

Als Pfropfgrundlage für die Pfropfprodukte A) und B) kommen praktisch alle Kautschuke mit Glastemperaturen $\leqslant$ 10°C in Frage. Beispiele sind Polybutadien, Polyisopren, Styrol-Butadien-Copolymerisate, Acrylnitril-Butadien-Copolymerisate, Acrylatkautschuke, EPM-Kautschuke (Ethylen/Propylen-Kautschuke) und EPDM-Kautschuke (Ethylen/Propylen/Dien-Kautschuke, die als Dien ein nichtkonjugiertes Dien wie z. B. Hexadien-1,5 oder Norbornadien in kleinen Mengen enthalten).

Diese Kautschuke müssen in Form von Teilchen eines mittleren Durchmessers $(d_{50})$ von 0,05 bis 20,0 µm, bevorzugt von 0,1 bis 2,0 µm und besonders bevorzugt von 0,1 bis 0,8 µm vorliegen.

Die Pfropfprodukte A) und B) werden durch Pfropfpolymerisation in Emulsion, Suspension oder Lösung oder durch Kombination dieser Verfahren in an sich bekannter Weise hergestellt.

Sie enthalten 5 bis 80 Gew.-% Kautschuk, insbesondere 20 bis 60 Gew.-%, und weisen Gelgehalte, gemessen in Aceton bei 25°C, von 30 bis 90 Gew.-%, insbesondere 40 bis 80 Gew.-% auf.

Als Pfropfmonomere sind Styrol, α-Methylstyrol, p-Methylstyrol, Vinyltoluol, Acrylnitril, Methylmethacrylat oder Mischungen daraus geeignet, insbesondere Mischungen von Acrylnitril mit Styrol.

Während das Pfropfprodukt A) durch Polymerisation dieser Monomeren in Gegenwart der Dien- oder Acrylatkautschuke hergestellt wird, erfolgt die Herstellung von Pfropfprodukt B) auch unter Verwendung der obengenannten Monomeren in Gegenwart der Dien- oder Acrylatkautschuke, wobei jedoch als weitere Monomerkomponente eine polymerisierbare Mono- oder Disäure, z. B. Acrylsäure, Methacrylsäure, Maleinsäure, Fumarsäure, Itaconsäure, Crotonsäure, Zimtsäure, Vinylsulfonsäure, Vinylbenzolsulfonsäure bzw. deren Gemische, wobei aliphatische $C_3$-$C_{10}$- oder aromatische $C_9$-$C_{18}$-Mono- oder Dicarbonsäuren bevorzugt sind, erforderlich ist.

Die erfindungsgemäßen Formmassen können erhalten werden, indem man ihre Bestandteile A) und B) miteinander bei höheren Temperaturen, insbesondere bei 100°C bis 280°C, z. B. in Knetern, auf Walzenstühlen oder Schneckenmaschinen mischt.

Fallen A) und B) als Dispersionen, Suspensionen oder Lösungen an, so kann man diese mischen und gemeinsam aufarbeiten.

Den Formmassen können übliche Additive wie Antioxidantien, Alterungsschutzmittel, Gleitmittel, Flammschutzmittel, Füllstoffe, Pigmente, Antistatika in den üblichen Mengen zugesetzt werden.

Die erfindungsgemäßen Legierungen sind matte flexible thermoplastische Formmassen mit guten Fließeigenschaften bei Verarbeitung durch Extrusion, Kalandrierung und Spritzguß. Sie können zu matten Formkörpern verarbeitet werden, sind aber auch als Modifikatoren für andere Kunststoffe geeignet, insbesondere für Thermoplaste wie Acrylnitril/Butadien/Styrol-Terpolymerisate (ABS), Methylmethacrylat/Butadien/Styrol-Terpolymerisate (MBS), Styrol/Acrylnitril-Copolymerisate (SAN), α-Methylstyrol/Acrylnitril-Copolymerisate, Polystyrol, schlagzähes Polystyrol (HIPS), Polymethylmethacrylat, Polyvinylchlorid, Polycarbonat, Polycarbonat/ABS-Gemische, Polyphenylenoxid, Polyphenylenoxid-HIPS-Gemische, Polyamide, z. B. Polyamid 6, Polyamid 66, Polyester, z. B. Polyethylenterephthalat, Polybutylenterephthalat. Als "Mattierungsmodifikatoren" dienen bevorzugt solche erfindungsgemäßen Mischungen, die viel Kautschuk - etwa 50 bis 70 % - enthalten. Ihre Menge ist im allgemeinen 5 bis 40 Gew.-%, bezogen auf das gesamte modifizierte Produkt.

Eine bevorzugte Mischung dieser Art besteht aus 10 bis 80 Gew.-% der erfindungsgemäßen matten Polymerlegierung,

2

90 bis 20 Gew.-% eines thermoplastischen Harzes aus 5 bis 40 Gew.-Teilen Styrol, α-Methylstyrol, p-Methylstyrol, Methylmethacrylat oder Gemischen daraus und 0 bis 70 Gew.-% eines aromatischen Polycarbonats.

**Beispiele und Vergleichsbeispiele**

Die folgenden Beispiele erläutern die Erfindung.
Die angegebenen Teile sind Gewichtsteile und beziehen sich immer auf Festbestandteile bzw. polymerisierbare Bestandteile.

**Herstellung der Pfropfprodukte**

In einem Reaktor werden G Teile Kautschukgrundlage (in Form eines Latex mit einem Feststoffgehalt zwischen 35 und 50 Gew.-%) auf 65 °C erwärmt, wonach 0,5 Teile Kaliumpersulfat (gelöst in 20 Teilen Wasser) zugegeben werden. Anschließend werden M Teile des in Tabelle 1 angegebenen Monomerengemischs sowie 2 Teile des in Tabelle 1 aufgeführten Emulgators (gelöst in 25 Teilen Wasser) innerhalb 4 Stunden zudosiert, wobei die Pfropfreaktion erfolgt. Nach einer Nachreaktionszeit wird der Pfropflatex nach der Zugabe von 1, 2 Teilen Antioxidantien in einer wäßrigen Magnesiumsulfat/Essigsäurelösung koaguliert. Das resultierende Pulver wird mit Wasser gewaschen und bei 70°C im Vakuum getrochnet.

**Tabelle 1:** Zusammensetzung und Herstellungsbedingungen der Pfropfprodukte

| Propf-produkt | Pfropf-produkt-typ | Kautschuk-grundlage | Mittlere Teilchen-größe [Durchmesser] | G [Teile] | Monomere | M [Teile] | Emulgator |
|---|---|---|---|---|---|---|---|
| 1 | A | Polybutadien-latex | 0,4 μm | 50 | 72 Styrol 28 Acrylnitril | 50 | Natriumsalz der disproportio-nierten Abie-tinsäure |
| 2 | A | Polybutadien-latex | 0,4 μm | 80 | 72 Styrol 28 Acrylnitril | 20 | Natriumsalz der disproportionierten Abietinsäure |
| 3 | A | Polybutyl-acrylat-latex | 0,5 μm | 50 | 72 Styrol 28 Acrylnitril | 50 | Natriumsalz der disproportionierten Abietinsäure |
| 4 | B | Polybutadien-latex | 0,4 μm | 50 | 65 Styrol 25 Acrylnitril 10 Methacrylsäure | 50 | Natriumsalz von $C_{9-18}$-Akryl-sulfonsäuren |
| 5 | B | Polybutadien-latex | 0,4 μm | 60 | 55 Styrol 15 Acrylnitril 10 Methylmeth-acrylat 20 Acrylsäure | 40 | Natriumsalz von $C_{9-18}$-Alkyl-sulfonsäuren |
| 6 | B | Polybutyl-acrylat-latex | 0,5 μm | 50 | 61 Styrol 24 Acrylnitril 14 Methacrylsäure | 50 | Natriumsalz von $C_{9-18}$-Alkylsul-fonsäuren |
| 7 | B | Polybutadien-latex | 0,4 μm | 65 | 58 Styrol 22 Acrylnitril 20 Methacrylsäure | 35 | Natriumsalz von $C_{9-18}$-Alkyl-sulfonsäuren |

**Herstellung und Ausprüfung der Formmassen**

P Teile eines Gemisches aus Pfropfprodukt A und Pfropfprodukt B in dem in Tabelle 2 angegebenen Gew.-Verhältnis werden mit H Teilen eines thermoplastischen Harzes und 3 Teilen eines Gleitmittels in einem Kneter miteinander vermischt und anschließend zu Normkleinstäben, einer Platte (zur Oberflächenbeurteilung) und einer Spirale (zur Beurteilung der Fließweglänge) verspritzt. Ein Teil des Materials wurde durch Extrusion zu Platten verarbeitet. Die Kerbschlagzähigkeit wurde bei Raumtemperatur ($a_k^{RT}$) und bei -40°C ($a_k^{-40°C}$) nach DIN 53 453 (Einheit: $kJ/m^2$), die Kugeldruckhärte ($H_c$) nach DIN 53 456 (Einheit : $N/mm^2$), die Wärmeformbeständigkeit (Vicat B) nach DIN 53 460 (Einheit: °C) und die Fließweglänge bei 220°C an einer Spirale von ca. 8 mm Breite und ca. 2 mm Stärke (Einheit: cm) gemessen. Die Glanzmessung erfolgte nach DIN 67 530 an einer ebenen Platte bei einem Reflektionswinkel von 60° (Reflektometerwert) mit Hilfe des Mehrwinkel-Reflektometers "Multi-Gloss" der Firma Byk-Mallinckrodt (siehe Tabelle 2).

Als Thermoplastharze werden eingesetzt:

Styrol/Acrylnitril (SAN) = 72 : 28-Copolymerisat mit einem $M_w$ von ca. 80 000,

α-Methylstyrol/Acrylnitril (AMSAN) = 69 : 31-Copolymerisat mit einem $M_w$ von ca. 75 000,

Bisphenol A-Polycarbonat (PC) mit einem $M_w$ von ca. 30 000,

alle Harze besitzen ein $\frac{M_w}{M_n}$ - 1 $\leqslant$ 2,0.

**Tabelle 2:** Zusammensetzung und Prüfdaten der Formmassen

| Formmasse | Pfropf-produkte | Gew.-Verhält-nis | P [Teile] | Thermo-plast-Harz | H [Teile] | $a_k^{RK}$ | $a_k^{-40°C}$ | $H_c$ | Prüf-daten Vicat B | Fließ-länge | Re-flek-to-meter-wert | Aussehen der extru-dierten Platte |
|---|---|---|---|---|---|---|---|---|---|---|---|---|
| 1 (Vergleich) | 1 | | 40 | SAN | 60 | 16 | 11 | 86 | 97 | 41 | 78 | glänzend |
| 2 (Vergleich) | 2 | | 30 | SAN | 70 | 18,5 | 12 | 79 | 91 | 38 | 66 | glänzend |
| 3 (Vergleich) | 3 | | 40 | SAN | 60 | 15 | 5 | 85 | 95 | 40 | 80 | glänzend |
| 4 (Vergleich) | 4 | | 40 | SAN | 60 | 12 | 7 | 87 | 98 | 34 | 25 | matt |
| 5 | 1 + 4 | 1 : 1 | 40 | SAN | 60 | 14 | 9 | 88 | 99 | 38 | 25 | matt |
| 6 | 2 + 5 | 2 : 1 | 30 | SAN | 70 | 14,5 | 8 | 85 | 96 | 38 | 19 | matt |
| 7 | 3 + 6 | 1 : 1 | 40 | SAN | 60 | 15 | 4,5 | 86 | 96 | 39 | 27 | matt |
| 8 | 1 + 7 | 3 : 2 | 30 | AMSAN | 70 | 12,5 | 6 | 90 | 104 | 31 | 11 | matt |
| 9 | 1 + 4 | 1 : 1 | 35 | AMSAN | 65 | 13 | 6 | 89 | 103 | 31 | 18 | matt |
| 10 | 1 + 4 | 1 : 1 | 35 | PC/SAN = 2 : 1-Gemisch | 65 | 22 | 7,5 | 80 | 110 | 23 | 25 | matt |

Wie aus der Tabelle 2 ersichtlich ist, führt die Einbringung eines Pfropfproduktes A alleine (Formmassen 1 bis 3) in eine Thermoplastmatrix zu keiner matten Oberfläche. Nach Abmischung des Pfropfproduktes B alleine mit dem Thermoplastharz kann zwar eine mattierte Oberfläche beobachtet werden, gleichzeitig treten jedoch ein Abfall der Kerbschlagzähigkeit und eine reduzierte Fließfähigkeit auf (Formmasse 4). Erst bei Einsatz der erfindungsgemäßen Abmischungen aus Pfropfprodukt A und Pfropfprodukt B in einer Thermoplastharz-Matrix (Formmassen 5 bis 10) wird sowohl bei einer Verarbeitung durch Extrusion als auch im Spritzguß eine matte Oberfläche ohne negativen Einfluß auf die sonstigen Eigenschaften erhalten.

**Patentansprüche**

1. Mischung aus

A) 99,95 bis 0,05 Gew.-%,

eines Pfropfproduktes eines Gemisches aus 40 bis 100 Gew.-Teilen Styrol, α-Methylstyrol, p-Methylstyrol, Vinyltoluol, Methylmethacrylat oder Mischungen daraus und 60 bis 0 Gew.-Teilen Acrylnitril auf einen teilchenförmigen Kautschuk mit einem mittleren Teilchendurchmesser ($d_{50}$) von 0,05 bis 20,0 µm und einer Glastemperatur $\leqslant$ 10°C mit einem Gesamtkautschukgehalt von 5 bis 80 Gew.-% und

B) 0,05 bis 99,95 Gew.-%,

eines Pfropfproduktes eines Gemisches aus 40 bis 99,9 Gew.-Teilen Styrol, α-Methylstyrol, p-Methylstyrol, Vinyltoluol, Methylmethacrylat oder Mischungen daraus, 40 bis 0,1 Gew.-Teilen einer eine polymerisierbare Doppelbindung enthaltenden Mono- oder Disäure und 0 bis 49 Gew.-Teilen Acrylnitril auf einen teilchenförmigen Kautschuk mit einem mittleren Teilchendurchmesser ($d_{50}$) von 0,05 bis 20,0 µm und einer Glastemperatur $\leqslant$ 10°C mit einem Gesamtkautschukgehalt von 5 bis 80 Gew.-%.

2. Mischung aus

A) 70 bis 30 Gew.-%, bevorzugt 65 bis 35 Gew.-%,

eines Pfropfproduktes eines Gemisches aus 60 bis 90 Gew.-Teilen Styrol, α-Methylstyrol, p-Methylstyrol, Vinyltoluol, Methylmethacrylat oder Mischungen daraus und 40 bis 10 Gew.-Teilen Acrylnitril auf einen teilchenförmigen Kautschuk mit einem mittleren Teilchendurchmesser ($d_{50}$) von 0,1 bis 1,0 μm und einer Glastemperatur ≤ 10°C mit einem Gesamtkautschukgehalt von 30 bis 70 Gew.-% und

B) 30 bis 70 Gew.-%, bevorzugt 35 bis 65 Gew.-%, eines Pfropfproduktes eines Gemisches aus 60 bis 85 Gew.-Teilen Styrol, α-Methylstyrol, p-Methylstyrol, Vinyltoluol, Methylmethacrylat oder Mischungen daraus, 30 bis 5 Gew.-Teilen einer eine polymerisierbare Doppelbindung enthaltenden Mono- oder Disäure und 10 bis 40 Gew.-Teilen Acrylnitril auf einen teilchenförmigen Kautschuk mit einem mittleren Teilchendurchmesser ($d_{50}$) von 0,1 bis 1,0 μm und einer Glastemperatur ≤ 10°C mit einem Gesamtkautschukgehalt von 30 bis 70 Gew.-%.

3. Mischung gemäß Anspruch 1 und 2, mit Acrylsäure oder Methacrylsäure bzw. deren Gemische als Säure.

4. Mischungen nach Anspruch 1 enthaltend

| 10 - 80 | Gew.-% der Mischung gemäß Anspruch 1, |
| 90 - 20 | Gew.-% eines thermoplastischen Harzes aus . |
| | 5 - 40 Gew.-Teilen Acrylnitril und |
| | 95 - 60 Gew.-Teilen Styrol, α-Methylstyrol, p-Methylstyrol, Methylmethacrylat oder Gemischen davon und |
| 0 - 70 | Gew.-% eines aromatischen Polycarbonats. |

## Claims

1. A mixture of

A) 99.95 to 0.05 % by weight of a graft product of 40 to 40 to 100 parts by weight styrene, α-methyl styrene, p-methyl styrene, vinyl toluene, methyl methacrylate or mixtures thereof and 60 to 0 parts by weight acrylonitrile on a particulate rubber having an average particle diameter ($d_{50}$) of from 0.05 to 20.0 μm and a glass temperature of ≤ 10°C for a total rubber content of 5 to 80 % by weight and

B) 0.05 to 99.95 % by weight of a graft product of a mixture of 40 to 99.9 parts by weight styrene, α-methyl styrene p-methyl styrene, vinyl toluene, methyl methacrylate or mixtures thereof, 40 to 0.1 part by weight of a mono- or di-acid containing a polymerizable double bond and 0 to 49 parts by weight acrylonitrile on a particulate rubber having an average particle diameter ($d_{50}$) of 0.05 to 20.0 μm and a glass temperature of ≤ 10°C for a total rubber content of 5 to 80 % by weight.

2. A mixture of

A) 70 to 30 % by weight and preferably 65 to 35 % by weight of a graft product of a mixture of 60 to 80 parts by weight styrene, α-methyl styrene, p-methyl styrene, vinyl toluene, methyl methacrylate or mixtures thereof and 40 to 10 parts by weight acrylonitrile on a particulate rubber having an average particle diameter ($d_{50}$) of 0.1 to 1.0 μm and a glass temperature of ≤ 10°C for a total rubber content of 30 to 70 % by weight and

B) 30 to 70 % by weight and preferably 35 to 65 % by weight of a graft product of a mixture of 60 to 85 parts by weight styrene, α-methyl styrene, p-methyl styrene, vinyl toluene, methyl methacrylate or mixtures thereof, 30 to 5 parts by weight of a mono- or di-acid containing a polymerizable double bond and 10 to 40 parts by weight acrylonitrile on a particulate rubber having an average particle diameter ($d_{50}$) of 0.1 to 1.0 μm and a glass temperature of ≤ 10°C for a total rubber content of 30 to 70 % by weight.

3. A mixture as claimed in claims 1 and 2 with acrylic acid or methacrylic acid or mixtures thereof as the acid.

4. Mixtures as claimed in claim 1 containing

10 to 80 % by weight of the mixture claimed in claim 1,
90 to 20 % by weight of a thermoplastic resin of
    5 to 40 parts by weight acrylonitrile and
    95 to 60 parts by weight styrene, α-methyl styrene,
    p-methyl styrene, methyl methacrylate or mixtures
    thereof and
0 to 70 % by weight of an aromatic polycarbonate.

## Revendications

1. Mélange de:

A) 99,95 à 0,05 % en poids,

d'un produit de greffage d'un mélange de 40 à 100 parties en poids de styrène, d'α-méthylstyrène, de p-méthylstyrène, de vinyltoluène, de méthacrylate de méthyle ou de mélanges de ces composants et de 60 à 0 parties en poids d'acrylonitrile sur un caoutchouc en particules à un diametre de particule moyen ($d_{50}$) de 0,05 à 20,0 μm ayant une température de transition du second ordre inférieure ou égale à 10°C, avec une teneur totale en caoutchouc de 5 à 80 % en poids et

B) 0,05 à 99,95 % en poids,

d'un produit de greffage d'un mélange de 40 à 99,9 parties en poids de styrène, d'α-méthylstyrène, de p-méthylstyrène, de vinyltoluène, de méthacrylate de méthyle ou de mélanges de ces composants, 40 à 0,1 parties en poids d'un mono- ou di-acide contenant une double liaison polymérisable et 0 à 49 parties en poids d'acrylonitrile sur un caoutchouc en particules à un diamètre de particule moyen ($d_{50}$) de 0,05 à 20,0 μm ayant une température de transition du second ordre inférieure ou égale à 10°C, avec une teneur totale en caoutchouc de 5 à 80 % en poids.

2. Mélange de:

A) 70 à 30 % en poids, de préférence 65 à 35 % en poids, d'un produit de greffage d'un mélange de 60 à 90 parties en poids de styrène, d'α-méthylstyrène, de p-méthyltoluène, de vinyltoluène, de méthacrylate de méthyle ou de mélanges de ces composants et de 40 à 10 parties en poids d'acrylonitrile sur un caoutchouc en particules à un diamètre de particule moyen ($d_{50}$) de 0,1 à 1,0 μm ayant une température de transition du second ordre inférieure ou égale à 10°C, avec une teneur totale en caoutchouc de 30 à 70 % en poids et

B) 30 à 70 % en poids, de préférence 35 à 65 % en poids, d'un produit de greffage d'un mélange de 60 à 85 parties en poids de styrène, d'α-méthylstyrène, de p-méthylstyrène, de vinyltoluène, de méthacrylate de méthyle ou de mélanges de ces composants, 30 à 5 parties en poids d'un mono- ou di-acide contenant une double liaison polymérisable et 10 à 40 parties en poids d'acrylonitrile sur un caoutchouc en particules à un diamètre de particule moyen ($d_{50}$) de 0,1 à 1,0 μm ayant une température de transition du second ordre inférieure ou égale à 10°C, avec une teneur totale en caoutchouc de 30 à 70 % en poids.

3. Mélange selon les revendications 1 et 2, contenant en tant qu'acide l'acide acrylique ou l'acide méthacrylique ou un mélange de ces acides.

4. Mélanges selon la revendication 1, contenant

10 à 80 % en poids du mélange selon la revendication 1,

90 à 20 % en poids d'une résine thermoplastique consistant en

        5 à 40 parties en poids d'acrylonitrile et

        95 à 60 parties en poids de styrène, d'α-méthylstyrène, de p-méthylstyrène, de méthacrylate de méthyle ou de mélanges de ces composants, et

0 à 70 % en poids d'un polycarbonate aromatique.